# DEMANDE DE BREVET EUROPEEN

(11) **EP 2 030 998 A1**
(43) Date de publication de la demande: **04.03.2009**
(21) Numéro de dépôt: 08162413.2
(22) Date de dépôt: 14.08.2008
(51) Int. Cl.: C08F 222/10, C08F 287/00, B29B 13/04

(54) **Procédé de préparation d'un article moulé transparent à base d'un alliage de polymer thermoplastique et de polymère thermodurcissable**

(30) Priorité: 29.08.2007 FR 0706055
(71) Demandeur: Essilor International (Compagnie Générale D'Optique), 94220 Charenton le Pont (FR)
(72) Inventeur: Berit-Debat, Fabien c/o ESSILOR INTERNATIONAL, 94220 CHARENTON LE PONT (FR); Lesartre, Noémie c/o ESSILOR INTERNATIONAL, 94220 CHARENTON LE PONT (FR)
(74) Mandataire: Cabinet Plasseraud

(57) **Abrégé**

La présente invention concerne un procédé de préparation d'un article moulé transparent comprenant un alliage d'un premier matériau polymère thermodurci formant la matrice dudit article, et d'un second matériau polymère dispersé au sein dudit premier matériau, ledit procédé comprenant au moins les étapes suivantes :
i) préparer un mélange polymérisable liquide par dissolution dudit second matériau polymère dans une composition polymérisable thermodurcissable précurseur dudit premier matériau polymère thermodurci,
ii) remplir un moule avec le mélange polymérisable liquide obtenu à l'étape i),
iii) refroidir le mélange polymérisable liquide remplissant le moule jusqu'à une température T inférieure ou égale à 0 °C,
iv) amorcer la polymérisation dudit mélange polymérisable liquide refroidi à une température T inférieure ou égale à 0 °C,
v) poursuivre la polymérisation dudit mélange polymérisable liquide jusqu'à obtention d'un alliage de polymères durci, et
vi) démoulage de l'article moulé formé par ledit alliage de polymères.
L' invention concerne également un article moulé transparent comprenant un alliage de polymères, dont au moins l'un est un polymère thermodurcissable, susceptible d'être obtenu par un tel procédé.

## Description

La présente invention concerne un procédé de moulage par coulée permettant d'obtenir un article transparent, non diffusant ou très peu diffusant, formé d'un alliage d'un matériau polymère thermodurci et d'un matériau polymère modifiant les propriétés mécaniques et/ou optiques du matériau polymère thermodurci, notamment un matériau polymère thermoplastique, le matériau polymère thermodurci constituant généralement la phase majoritaire de l'alliage. Le procédé met en jeu une étape de polymérisation et de réticulation d'une composition thermodurcissable, notamment par photo-polymérisation, dont les conditions ont été optimisées afin d'éviter une macro-séparation de phase. L'invention concerne plus particulièrement le domaine des lentilles ophtalmiques.

Il existe deux types de substrats généralement utilisés pour la fabrication d'articles d'optique, par exemple des lentilles ophtalmiques, à savoir les substrats en verre minéral et les substrats en verre organique. Actuellement, le marché tend à se développer très largement en faveur des verres organiques qui présentent deux avantages majeurs par rapport aux verres minéraux : leur bonne résistance aux chocs et leur légèreté. Les substrats en verre organique les plus utilisés sont le polycarbonate de bisphénol A et celui obtenu par polymérisation du bis(allyl carbonate) de diéthylèneglycol, vendu sous la dénomination commerciale CR 39^{®} par la société PPG INDUSTRIES (lentille ORMA^{®} ESSILOR). D'autres allylcarbonates de polyols aliphatiques ou aromatiques, linéaires ou ramifiés, peuvent être employés. On peut également citer les verres organiques obtenus par polymérisation de monomères thio(méth)acryliques, de monomères thio-uréthane, de monomères (méth)acrylates d'alkyle en C₁-C₄, tels que le méthacrylate de méthyle, de monomères poly(méth)acrylates aromatiques polyéthoxylés tels que les di(méth)acrylates de bisphénol A éthoxylés, notamment le 2,2-bis[4-(méthacryloxy-diéthoxy)-phényl]-propane.

Bien que les substrats organiques connus soient généralement satisfaisants, il serait souhaitable de disposer d'autres types de compositions polymérisables permettant d'obtenir de nouveaux substrats transparents, conduisant à des articles d'optique combinant des propriétés intéressantes telles qu'une bonne résistance aux chocs et aux solvants. Certains substrats à base d'alliages de polymères permettent d'atteindre ces objectifs.

Un alliage de polymères, au sens où ce terme est utilisé dans la présente invention, désigne un mélange d'au moins deux polymères de nature chimique différente. Il existe trois grandes catégories d'alliages de polymères : (1) un alliage d'un polymère thermodurcissable avec un autre polymère thermodurcissable; (2) un alliage d'un polymère thermoplastique avec un autre polymère thermoplastique; et (3) un alliage d'un polymère thermoplastique avec un polymère thermodurcissable. Cependant, la gamme d'alliages de polymères qui soient transparents et non ou très peu diffusants est restreinte, notamment dans le cas des alliages du type thermoplastique, / thermodurci.

L'objectif de la présente invention est de fournir un procédé de moulage par coulée permettant d'obtenir un article constitué d'un alliage de polymères comprenant un premier matériau polymère thermodurci et un second matériau polymère, de préférence thermoplastique, modifiant les propriétés mécaniques et/ou optiques du matériau polymère thermodurci, et ce, en évitant une macro-séparation de phases à l'origine d'un trouble du matériau obtenu, de sorte que l'article moulé obtenu soit transparent et non ou très peu diffusant.

Par article ou matériau transparent, non diffusant ou très peu diffusant, on entend, au sens de la présente invention, que l'observation d'une image au travers de l'article est perçue sans perte significative de contraste. Autrement dit, l'interposition de l'article transparent entre une image et un observateur de celle-ci ne réduit pas significativement la qualité de l'image.

La présente invention a par conséquent pour objet un procédé de préparation d'un article moulé transparent comprenant un alliage d'un premier matériau polymère thermodurci constituant la matrice dudit article, et d'un second matériau polymère, de préférence un matériau polymère thermoplastique, dispersé au sein dudit premier matériau polymère thermodurci, ledit procédé comprenant au moins les étapes suivantes :
i) préparation d'un mélange polymérisable liquide par solubilisation dudit second matériau polymère dans une composition polymérisable thermodurcissable précurseur dudit premier matériau polymère thermodurci,
ii) remplissage d'un moule avec le mélange polymérisable liquide obtenu à l'étape i),
iii) refroidissement du mélange polymérisable liquide remplissant le moule jusqu'à une température T inférieure ou égale à 0 °C,
iv) amorçage de la polymérisation dudit mélange polymérisable liquide refroidi à une température T' inférieure ou égale à 0 °C,
v) poursuite de la polymérisation dudit mélange polymérisable liquide jusqu'à obtention d'un alliage de polymères durci, et
vi) démoulage de l'article moulé formé par ledit alliage de polymères.

La présente invention a en outre pour objet un article moulé transparent susceptible d'être obtenu par un tel procédé, ledit article comprenant un alliage de polymères dont au moins l'un est un polymère thermodurcissable.

L'article moulé transparent préparé par le procédé de l'invention est constitué d'un alliage de polymères. Il comprend un premier matériau polymère thermodurci formant la matrice de l'article fini et, dispersé au sein dudit premier matériau polymère durci, un second matériau polymère, de préférence de nature thermoplastique, capable de modifier les propriétés mécaniques et/ou optiques dudit premier matériau polymère.

La phase thermodurcie formée par le premier matériau est de préférence la phase majoritaire. Le premier matériau polymère thermodurci peut comprendre en principe un ou plusieurs polymères réticulés, mais contient de préférence un seuls polymère réticulé.

De même, le second matériau polymère peut comprendre un ou plusieurs polymères, mais comprend de préférence un seul polymère thermoplastique.

L'article moulé transparent est préparé, selon l'invention, par polymérisation d'un mélange polymérisable liquide, comportant une composition polymérisable thermodurcissable (précurseur du polymère thermodurci) dans laquelle est solubilisé ledit second matériau polymère, le durcissement de ladite composition polymérisable thermodurcissable formant le premier matériau thermodurci. Le second matériau doit par conséquent être soluble dans ladite composition polymérisable thermodurcissable du mélange polymérisable liquide.

Le procédé de l'invention est caractérisé par le fait que le mélange polymérisable liquide est porté, à l'issue de l'étape de remplissage du moule, à une température T inférieure ou égale à 0 °C, et par le fait que l'amorçage et éventuellement la poursuite de la polymérisation dudit mélange polymérisable liquide est mise en oeuvre à une température T' inférieure ou égale à 0°C, T' pouvant être identique ou différente de T. Ces conditions particulières de polymérisation permettent d'éviter le phénomène de macro-séparation de phase, entre le premier matériau polymère en cours de polymérisation et le polymère thermoplastique dispersé dans le premier matériau. Effectivement, le fait de refroidir le mélange polymérisable à une température inférieure ou égale à 0°C augmente sa viscosité et évite l'expulsion de la phase constituée du deuxième matériau hors du réseau thermodurci en croissance constituant le premier matériau. On arrive ainsi à atteindre l'état de gel chimique du matériau thermodurci avant qu'une macro-séparation de phase notable ne puisse avoir lieu.

De préférence, la valeur de la température T de refroidissement de la composition et la valeur de la température T' à laquelle est réalisée le début de la polymérisation du mélange liquide polymérisable est comprise indépendamment entre -15 °C et 0 °C, mieux encore entre -12 °C et -5 °C. La température T' peut varier au cours de l'amorçage et de la polymérisation mais doit rester dans la gamme spécifiée.

L'adjectif « thermodurcissable » ou « thermodurci(e) » tel qu'il est utilisé dans la présente demande ne désigne pas un système ou une composition durcissable ou durci(e) par application de chaleur. En effet, il ressort de ce qui précède que le durcissement par polymérisation et réticulation se fait, au contraire, à température inférieure ou égale à 0 °C, c'est-à-dire après refroidissement de la composition. Ce terme est utilisé dans la présente demande, comme dans le domaine des matières plastiques en général, par opposition au terme de « thermoplastique ». Autrement dit, un polymère thermodurci est un matériau dur, formé par un réseau macromoléculaire tridimensionnel fortement réticulé qui ne se fluidifie pas à température élevée.

La composition polymérisable thermodurcissable représente de préférence de 70 à 97 % de la masse du mélange liquide polymérisable. Elle comprend au moins un matériau polymérisable choisi parmi un monomère polymérisable, un oligomère polymérisable et un prépolymère polymérisable.

La composition polymérisable thermodurcissable de l'invention comprend préférentiellement au moins un monomère choisi parmi un polyméthacrylate aliphatique monomère polymérisable, un polyméthacrylate aromatique monomère polymérisable, un polyacrylate aliphatique monomère polymérisable, et un polyacrylate aromatique monomère polymérisable.

Les poly(méth)acrylates aliphatiques utilisables dans la présente invention englobent tout composé aliphatique contenant, dans sa structure, au moins deux fonctions (méth)acrylate, tels que des composés di-, tri-, tétra-, penta- ou hexa(méth)acrylates aliphatiques. Le groupe aliphatique des poly(méth)acrylates aliphatiques de l'invention peut être, sans limitation, un groupe aliphatique en C₁-C₁₀, linéaire ou ramifié, pouvant contenir une ou plusieurs doubles liaisons, un groupe polyalkylèneglycol en C₁-C₂₅, alcoxyalkylène ou hydroxyalkylène. D'une manière générale, les poly(méth)acrylates aliphatiques utilisables dans la présente invention peuvent être tous les composés obtenus par réaction d'un alcool aliphatique difonctionnel ou polyfonctionnel avec l'acide acrylique ou l'acide méthacrylique, ledit alcool aliphatique difonctionnel ou polyfonctionnel pouvant être modifié à souhait par un acide carboxylique ou par de l'oxyde d'éthylène ou de l'oxyde de propylène. Des exemples particuliers non limitatifs de poly(méth)acrylates aliphatiques sont le di(méth)acrylate d'éthylène, le di(méth)acrylate de propylène, le di(méth)acrylate de triméthylène, le di(méth)acrylate de tétraméthylène, le di(méth)acrylate d'hexaméthylène, le di(méth)acrylate de décaméthylène, le tri(méth)acrylate de glycérol, le di(méth)acrylate de diéthylèneglycol, le di(méth)acrylate de triéthylèneglycol, le di(méth)acrylate de tétraéthylèneglycol, le tri(méth)acrylate de pentaérythritol, le tétra(méth)acrylate de pentaérythritol, le tri(méthacrylate) de diméthylolpropane modifié par l'hydroxypivalylaldehyde, le tri(méth)acrylate de triméthyloléthane, le tri(méth)acrylate de triméthylolpropane, le tétra(méth)acrylate de ditriméthylolpropane, le tri(méth)acrylate dipentaérythritol, le tri(méth)acryate de dipentaérythritol modifié par l'acide propionique, le tétra(méth)acrylate de dipentaérythritol, le penta(méth)acrylate de dipentaérythritol, l'hexa(méth)acrylate de dipentaérythritol, l'hexa(méth)acrylate de tripentaérythritol, l'hepta(méth)acrylate de tripentaérythritol, l' octa(méth)acrylate de tripentaérythritol et leurs mélanges.

Les poly(méth)acrylates aromatiques utilisables dans la présente invention englobent tous les composés aromatiques contenant, dans leur structure, au moins deux fonctions (méth)acrylate, tels que des composés di-, tri-, tétra-, penta- ou hexa(méth)acrylates aromatiques. De préférence, les poly(méth)acrylates aromatiques sont choisis parmi les di(méth)acrylates aromatiques, mieux encore, parmi les diméthacrylates aromatiques polyalcoxylés et les diacrylates aromatiques polyalcoxylés.

Une classe préférée de di(méth)acrylates aromatiques polyalcoxylés regroupe les composés répondant à la formule (I) : 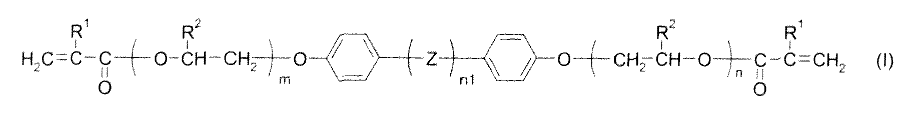 dans laquelle R¹ représente un atome d'hydrogène ou un radical alkyle en C₁-C₆, R² représente un atome d'hydrogène, un radical alkyle en C₁-C₆ ou le groupe 2-hydroxyéthyle, n1 est égal à 0 ou 1, la somme m + n étant un nombre entier allant de 1 à 10.

Lorsque n1 est égal à 1, Z désigne O, S, Se, NH, C=O, SO, SO₂, SeO₂, CH₂, -CH=CH- ou -C(R)₂- avec R représentant un atome d'hydrogène ou un radical alkyle en C₁-C₆. Conformément à l'invention, R¹ et R² désignent chacun, indépendamment l'un de l'autre, de préférence un groupement méthyle, éthyle ou un atome d'hydrogène. Les composés de formule (I) plus particulièrement préférés répondent à la formule (II) _{:} 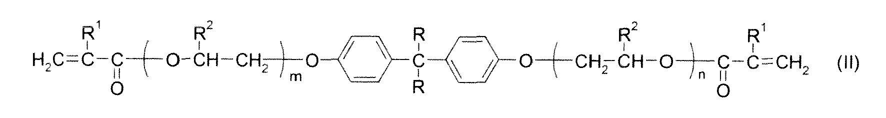 dans laquelle R¹ et R² représentent, indépendamment l'un de l'autre, un atome d'hydrogène ou un groupe CH₃, R représente un atome d'hydrogène ou un radical alkyle en C₁-C₆, la somme m + n étant un nombre entier allant de 2 à 8.

Les composés aromatiques poly(méth)acryliques de formule (II) préférés sont des di(méth)acrylates de bisphénols A et F polyalcoxylés, c'est-à-dire ceux dans lesquels R désigne H ou CH₃. Parmi ceux-ci, on peut citer de manière non exhaustive le 2,2-bis[4-(acryloxy-éthoxy)-phényl]propane, le 2,2-bis[4-(méthacryloxy-éthoxy)phényl]-propane, le 2,2-bis[4-(acryloxy-diéthoxy)-phényl]propane, le 2,2-bis[4-(méthacryloxy-diéthoxy)phényl]propane, le 1,1-bis[4-(acryloxy-éthoxy)phényl]méthane, le 1,1-bis[4-(méthacryloxy-éthoxy)phényl]méthane, le 1,1-bis[4-(acryloxy-diéthoxy)phényl]méthane, le 1,1-bis[4-(méthacryloxy-diéthoxy)phényl]méthane.

Le poly(méth)acrylate aromatique préféré est le diméthacrylate de bisphénol A tétraéthoxylé, ou 2,2-bis[4-(méthacryloxy-diéthoxy)phényl]propane, commercialisé par la société Akzo-Nobel sous le nom D121, et répondant à la formule (III), c'est-à-dire le composé de formule (II) dans lequel R¹ représente un groupe -CH₃, R² représente H, R représente, avec m et n égaux à 2 :

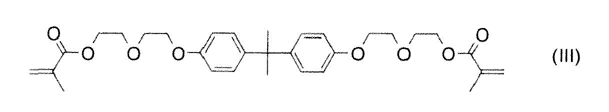

La polymérisation du mélange polymérisable selon l'invention peut être de type radicalaire, anionique, cationique ou s'effectuer par métathèse par ouverture de cycle en présence de cyclo-oléfines, techniques bien connues de l'homme du métier. Dans le cas où le mélange polymérisable selon l'invention contient des monomères polymérisables porteurs de groupes éthyléniques, l'amorçage de la polymérisation et la polymérisation sont généralement effectuées sous irradiation. Il peut s'agir d'une photo-polymérisation, éventuellement en présence d'un amorceur de polymérisation, ou bien d'une irradiation au moyen d'un faisceau d'électrons (*electron beam irradiation*), un type de polymérisation qui ne nécessite pas la présence d'un amorceur de polymérisation puisque l'énergie du faisceau d'électrons est suffisante pour créer les radicaux libres nécessaires à la polymérisation. Le mélange polymérisable selon l'invention peut également être polymérisé en utilisant une combinaison de ces méthodes. De préférence, la composition polymérisable thermodurcissable de l'invention comprend au moins un amorceur de polymérisation, de préférence au moins un photo-amorceur. Le mélange polymérisable de l'invention étant polymérisé à une température relativement faible, il est préférable d'utiliser une méthode de phots-polymérisation avec ou sans amorceur de polymérisation, plutôt qu'une autre méthode.

Selon un mode de réalisation particulièrement préféré, la composition polymérisable thermodurcissable de l'invention est polymérisée par photo-polymérisation et comprend au moins un photo-amorceur celui-ci représentant préférentiellement de 0,1% à 10% de la masse de la composition polymérisable thermodurcissable.

Parmi les photo-amorceurs utilisables aux fins de l'invention dans la composition polymérisable thermodurcissable, on peut citer, sans limitation, les α-hydroxy-cétones aromatiques, les α-amino-cétones, les benzophénones, les acétophénones, les benzyldiméthylcétals, les oxydes de monoacylphosphine (MAPO), les oxydes de bisacylphosphine (BAPO), les mélanges amine tertiaire /dicétone, les alkylbenzoyléthers, les éthers de benzoïne, les glyoxylates de phényle, les thioxanthones et des photo-amorceurs cationiques tels que les sels de triaryl sulfonium et les sels d'aryliodonium.

On peut citer en particulier les photo-amorceurs commercialisés par la société Ciba Specialty Chemicals sous la dénomination générale IRGACURE^{®}, notamment le photo-amorceur IRGACURE^{®} 184 (1-hydroxycyclahexyl-phénylcétone), le photo-amorceur TRGACUPE^{®} 500 qui est un mélange 50/50 en masse de 1-hydroxycyclohexyl-phénylcétone et de benzophénone, le photo-amorceur IRGACURE^{®} 651 (2,2-diméthoxy-2-phényl-acétophénone), le photo-amorceur IRGACURE^{®} 819 (oxyde de bis(2,4,6-triméthylbenzoyl)-phénylphosphine), le photo-amorceur IRGACURE^{®} 907 (2-phénylphosphine), photo-amorceur IRGACURE 907 (2-méthyl-1-[4-(méthylchio)-phényl]-2-morpholino-propan-1-one), le photo-amorceur IRGACURE^{®} 1700 (mélange 25/75 en masse d'oxyde de bis(2,6-diméthoxybenzoyl)-2,4-4-triméthylpentyl-phoshine et de DAPCCUR 1173), les photo-amorceurs commercialisés par la société Ciba Specialty Chemicals sous la dénomination générale DAROCUR^{®}, notamment le photo-amorceur DAROCUR^{®} 1173 (2-hydroxy-2-méthyl-1-phényl-propan-1-one), le photo-amorceur DAROCUR^{®} TPO (oxyde de 2,4,6-triméthylbenzoyl-diphénylphosphine), le photo-amorceur DAROCUR^{®} 4265 (mélange 50/50 en masse de DAROCUR^{®} 1173 et de DAROCUP^{®} TPO), le photo-amorceur commercialisés par la société Ciba Specialty Chemicals sous la dénomination CGI 1850, qui est un mélange 50/50 en masse de IRGACORE^{®} 184 et d'oxyde de bis(2,6-diméthoxybenzoyl)-2,4-4-triméthylpentyl-phosphine, les photo-amorceurs commercialisés par la société BASF sous la dénomination générale Lucirin^{®}, notamment le photo-amorceur Lucirin^{®} TPO-L (2,4,6-triméthylbenzoylphényl-phosphinate d'éthyle), l'oxyde de bis(2,6-diméthoxy-benzoyl)-2,4-4-triméthylpentyl-phosphine, la benzophénone, la 2,4,6-triméthylbenzophénone, la 4-méthylbenzophénone, la 2,2-diméthoxy-2-phényl-acétophénone, la 2,2-diéthoxy-acétophénone (DEAP, commercialisée par Upjohn), la 4-(2-thoxy)phényl-(2-hydroxy-2-méropyl) cétone, la 2-benzyl-2-*N*,*N*-diméthylamino-1-(4-morpholinophényl)-butan-1-one.

Le photo-amorceur préféré est le CGI 1850, répondant à la formule (IV) :

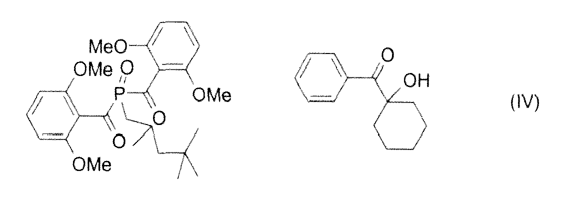

En général, la masse des amorceurs de polymérisation représente de 0,1 à 10 % de la masse de la composition polymérisable thermodurcissable selon l'invention. La réaction de polymérisation est amorcée en utilisant un moyen approprié, à savoir la lumière visible, un rayonnement UV, ou tout autre moyen, le choix dépendant du type de photo-amorceur utilisé.

Les amorceurs de polymérisation peuvent être utilisés seuls ou en mélange avec des agents de modification de durcissement tels que, par exemple, des photo-sensibilisateurs, des accélérateurs (catalyseurs) ou des inhibiteurs de polymérisation, dans des proportions classiques. Certains photo-amorceurs peuvent également avoir des propriétés de photo-sensibilisation.

Des exemples non limitatifs de photo-sensibilisateurs et d'accélérateurs utilisables dans la présente invention sont des thioxanthones telles que l'ITX (2- ou 4-isopropyl-thioxanthone) ou les chlorothioxanthones telles que la CPTX (1-chloro-4-proxanthone), des quinones telles que la camphroquinone, des benzanthrones, la cétone de Michler (4,4'-bis(diméthylamino)-benzophénone), la fluorénone, la triphényl acétophénone, la diméthyl-éthanolamine, la méthyldiéthanolamine, la triéthanolamine, la DMPT (*N*,*N*-diméthyl-para-toluidine la MHPT (*N*-[2-hydroxyéthyl]-M-méthyl-para-toluidine), l'ODAB (para-*N*,*N-*diméthylamino benzoate d'octyle), l'EDAB (para-*N*,*N-*diméthylamino-benzoate d'éthyle, commercialisé par Aceto Corporation sous le nom Quantacure^{®} EPD), l'EDMA (2-éthyl-9,10-duiméthoxyanthracène ou leurs mélanges. En particulier, un mélange camphroquinone / EDAB peut être employé.

Des exemples non limitatifs d'inhibiteurs de la polymérisation (inhibiteurs de radicaux libres) utilisables dans la présente invention sont le sel d'ammonium de la *N*-nitroso-*N*-phénylhydroxylamine, le sel d'aluminium de la tris[*N*-nitroso-*N*-phénylhydroxylamine, le 4-méthoxyphénol (MEHQ), l'hydroquinone et les hydroquinones substitutées, le pyrogallol, la phénothiazine, le 4-éthyl-catéchol, les amines stériquement encombrées et leurs mélanges.

La composition polymérisable thermodurcissable selon l'invention peut également comporter un certain nombre d'autres additifs classiquement utilisés dans les compositions polymérisables pour articles d'optique, en particulier les lentilles ophtalmiques, dans des proportions classiques. Des exemples d'additifs sont, sans limitation, des colorants, des stabilisants tels que des absorbeurs d'UV, des antioxydants et des agents anti-jaunissement, des parfums, des déodorants, des agents de démoulage, des lubrifiants, des promoteurs d'adhésion et des agents de couplage.

Parmi les absorbeurs d'UV (systèmes filtrant les radiations UV) utilisables aux fins de l'invention dans la composition polymérisable thermodurcissable, on peut citer, sans limitation, l'acide 4-aminobenzoïque (PABA) et ses sels, l'acide anthranilique et ses sels, l'aride salicylique et ses sels ou ses esters, notamment les hydroxybenzoates d'aryle, l'acide 4-hydroxycinnamique et ses sels, les dérivés sulfoniques de benzoxazoles, benzimidazoles et benzothiazoles et leurs sels, les benzophénones, notamment les dérivés sulfoniques de benzophénones et les 2-hydroxybenzophénones et leurs sels, les dérivés sulfoniques de benzylidène camphre et leurs sels, les dérivés de benzylidène camphre substitués par un groupe ammonium quaternaire et leurs sels, les dérivés phtalylidène de l'acide camphrosulfonique et leurs sels, les benzotriazoles, notamment les dérivés sulfoniques du benzotriazole et leurs sels, les oxalamides, les oxanilides, et leurs mélanges.

Des exemples non limitatifs d'absorbeurs d'UV utilisables dans la présente invention sont le 2-(2-hydroxyphényl)-2H-benzotriazole, le PBSA (sel de sodium de l'acide 2-phényl-benzimidazole-5-sulfonique, commercialisé sous le nom PARSOL^{®} HS par Givaudan-Roure), le 4-*tert-*butyl-4'-méthoxy-dibenzoylméthane (commercialisé sous le nom PARSOL^{®} 1789 par Givaudan-Roure), le p-méthoxycinnamate de 2-éthylhexyle ou avobenzone (commercialisé sous le nom PARSOL^{®} MCX par Givaudan-Roure), le *p*-méthoxycinnamate d'octyle, l'UVINUL^{®} MS 40 (acide 2-hydroxy-4-méthoxybenzophénone-5-sulfonique, BASF), l'UVINUL^{®} M 40 (2-hydroxy-4-méthoxybenzophénone, BASF), l'octocrylène (2-cyano-3,3-diphénylacrylate de 2-éthylhexyle), le 4-diméthylaminobenzoate de 2-éthylhexyle (octyl diméthyl-PABA), le salicylate de triéthanolamine, le salicylate d'octyle. Il est également possible d'utiliser des polymères ayant des propriétés de photo-protection UV, notamment les polymères comprenant des groupes benzylidène camphre et/ou benzotriazole, substitués par des groupes sulfo ou ammonium quaternaire. Ils peuvent être utilisés seuls ou en mélange avec d'autres absorbeurs d'UV.

Les agent anti-jaunissement tels que creux décrits dans les brevets US 5442022, US 5445828, US 5702825, US 5741831 et FAR 2699541 peulven être utilisés, sans limitation, seuls ou en mélange. L'agent anti-jaunissement préféré est le 3-méthyl-but-2-én-1-ol (M-BOL). En général, la masse des agents anti-jaunissement représente de 0,5 à 4 % de la masse de la composition polymérisable thermodurcissable selon l'invention.

Parmi les antioxydants utilisables aux fins de l'invention dans la composition polymérisable thermodurcissable, on peut citer, sans limitation, les antioxydants phénoliques, stériquement encombrés, l'IRGANOX^{®} 245 DW (éthylènebis(oxyéthyléne)bis-(3-(5-*tert-*butyl-4-hydroxy-*m*-tolyl)prepionate) commercialisé par la société Ciba Specialty Chemicals.

Le second matériau, utilisé dans la présente invention pour modifier les propriétés mécaniques et/ou optiques du premier matériau, comprend au moins un polymère et représente de préférence de 3% à 30 % de la masse du mélange polymérisable selon l'invention. Ce second matériau est soluble dans la composition polymérisable thermodurcissable définie ci-dessus et est de préférence un matériau thermoplastique.

Selon un premier mode de réalisation préféré du procédé de la présente invention, le second matériau polymère comprend au moins un copolymère à blocs, également appelé copolymère séquence.

Les copolymères à blocs, notamment diblocs et triblocs, appropriés pour la présente invention sont bien connus de l'homme du métier. De préférence, le second matériau selon l'invention comprend au moins un copolymère triblocs comportant au moins un bloc polystyrène, au moins un bloc polybutadiène et au moins un bloc poly(méthacrylate de méthyle) ou poly(acrylate de méthyle). Les polymères triblocs particulièrement préférés sont les copolymères triséquencés polystyrène-*bloc*-polyadiène-*bloc*-poly(méthacrylate de méthyle) (PS-*b*-PB-*b*-PMMA), appelés ci-après copolymères SBM.

Les copolymères à blocs utilisables dans le cadre de l'invention sont notamment décrits dans les demandes de brevet WO 2005/073314 et WO 2005/014699. On se référera particulièrement à ces documents pour une description détaillée des parties PS, PB et PMMA de ces copolymères à blocs.

Enfin, il est important pour l'obtention d'un article moulé transparent comprenant un alliage de polymères, par le procédé de l'invention que le bloc poly(méthacrylate de méthyle) (PMMA) du polymère à blocs représente une fraction relativement importante du copolymère à blocs. Selon une variante avantageuse de l'invention, le bloc de PMMA représente de préférence de 50 % à 80 % en poids, plus préférentiellement de 52 % à 70 % en poids, de la masse moléculaire moyenne en poids du copolymère à blocs polystyréne-bloc-polybutadiène-bloc-poly(méthacrylate de méthyle).

Ainsi, pour un copolymère triblocs SBM présentant une masse molaire moyenne en poids comprise entre 15 000 et 200 000 g/mol, la masse moléculaire moyenne en poids du bloc poly(méthacrylate de méthyle) est de préférence comprise entre 10 000 et 100 000 g/mol,

Dans le cadre de l'invention il est entendu que les copolymères à blocs utilisés peuvent être un mélange de copolymères triblocs et de copolymères diblocs de types polystyrène-*bloc*-polybutadiène. Ces copolymères sont notamment décrits dans la demande de brevet WO 2005/073314.

Selon, un deuxième mode de réalisation préféré le second matériau comprend au moins une polysulfone (PSU). Les polysulfones utilisables dans la présente invention peuvent être tout polymère contenant des groupes sulfone dans sa chaîne principale, telles que les poly(arylène sulfone), par exemple la poly(phénylène sulfone), les poly(éther sulfone) ou les poly(éther arylsulfone). Ces polysulfones doivent bien entendu être solubles dans les compositions polymérisables thermodurcissables de l'invention. Les polysulfones selon l'invention ont typiquement une masse moléculaire moyenne en poids variant de 20 000 à 60 000 g/mol, de préférence de 30 000 à 40 000 g/mol. De préférence, les polysulfones sont des poly(éther sulfone) ou des poly(éther arylsulfone). Le motif de base de ces deux catégories de polysulfones répond à la formule générale (VI) : 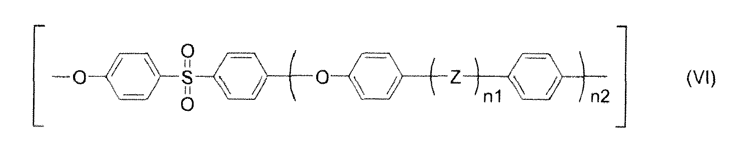 dans laquelle n1 est égal à 0 ou 1, n2 désigne un nombre entier allant de 0 à 10, Z désigne O, S, Se, NH, C=O, SO, SO₂, SeO₂, CH₂, -CH=CH- ou -C(R)₂- avec R représentant un atome d'hydrogène ou un radical allyle en C₁-C₆. Lorsque n2 est égal à 0, le composé de formule (VI) est une poly(éther sulfone). Lorsque n2 est non nul, le composé de formule (VI) est une poly(éther arylsulfone). Une classe préférée de polysulfones regroupe les poly(éther arylsulfone) dont le motif de base répond à la formule (VII) : 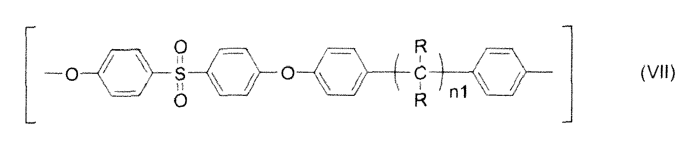 dans laquelle n1 est égal à 0 ou 1, R représente un atome d'hydrogène ou un radical alkyle en C₁-C₆. Parmi les composés de formule (VII), on peut citer la polysulfone de 4,4'-dihydroxybiphényl (n1 = 0), la polysulfone de bisphénol A (n1 = 1, R = CH₃) et la polysulfone de bisphénol F (n1 = 1, R = H). La polysulfone préférée pour l'invention est la polysulfone de bisphénol A, dont le motif de base répond à la formule (VIII), et qui est commercialisée notamment par Aldrich sous la référence 42,830-2 :

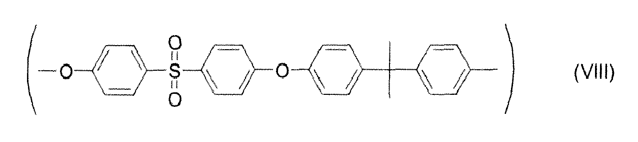

Comme énoncé précédemment, le second matériau polymère est de préférence un matériau polymère thermoplastique. Tout polymère thermoplastique est susceptible d'être utilisé dans le procédé selon l'invention, pourvu qu'il soit initialement soluble dans la composition polymérisable thermodurcissable mise en jeu. Outre parmi les polysulfones et les copolymères à blocs précédemment définis, le second matériau pourra être choisi, de façon non limitative, parmi les (co)polymères thermoplastiques suivants : les poly(méth)acrylates aliphatiques, tels que le poly(méth)acrylate de méthyle, le polyéthylène, le polypropylène, le polystyrène, le poly(sulfure de phénylène), les poly(oxydes d'arylène), les polyimides, les polyesters, les polycarbonates tels que le polycarbonate de bisphénol A, le poly(chlorure de vinyle), les polyamides tels que les nylons, les polyuréthanes thermoplastiques et leurs mélanges. Outre les poly(méth)acrylates aliphatiques ou aromatiques précédemment définis, la composition polymérisable thermodurcissable de l'invention pourra comprendre des précurseurs de polyimides, des précurseurs de polycyclopentadiènes, des précurseurs de résines époxy, des polycarbonates tels que des bis(allylcarbonates) et leurs mélanges.

Une combinaison particulièrement préférée parmi celles-ci utilise le poly(méth)acrylate de méthyle en tant que second matériau polymère et une composition polymérisable thermodurcissable comprenant un poly(méth)acrylate aliphatique ou aromatique.

Le procédé de l'invention comprend au moins six étapes. La première consiste à préparer un mélange polymérisable par solubilisation du second matériau polymère dans la composition polymérisable thermodurcissable. Le second matériau polymère est utilisé de préférence sous forme de poudre ou de granules. Il est généralement ajouté progressivement et sous agitation à la composition polymérisable thermodurcissable. Si la dispersion obtenue n'est pas homogène à température ambiante, elle peut être chauffée sous agitation dans un bain d'huile thermostaté jusqu'à ce que le second matériau soit totalement solubilisé. Par température ambiante, on entend dans la présente invention une température comprise entre 15 et 25 °C. Cette phase de dissolution peut prendre plusieurs semaines à une température de l'ordre de 80 °C. Le mélange polymérisable obtenu, généralement transparents et visqueux, peut être filtré, éventuellement à chaud, puis dégazé sous agitation, éventuellement à chaud, avant de servir à la deuxième étape de moulage par coulée. Celle-ci consiste à remplir un moule avec le mélange polymérisable ainsi obtenu. De façon optionnelle, ledit mélange polymérisable peut être préchauffé, tout comme le moule. Généralement, une température de l'ordre de 90 °C convient parfaitement. Le mélange liquide polymérisable peut par exemple être coulé dans un assemblage constitué de deux parties de moule en verre minéral maintenues par un ruban adhésif en périphérie. La troisième étape consiste à amener le mélange polymérisable remplissant le moule à une température T inférieure ou égale à 0 °C, en le plaçant par exemple dans un congélateur, de façon à augmenter sa viscosité. A cette température T, le mélange polymérisable est liquide. L'assemblage peut être laissé durant une nuit complète au congélateur afin, par exemple, de s'assurer de l'homogénéité de la température du mélange polymérisable avant polymérisation. Il n'est cependant pas nécessaire que la température du congélateur soit égale à ladite température T inférieure ou égale à 0 °C. La quatrième étape consiste à amorcer, de préférence par photoamorçage, la polymérisation dudit mélange polymérisable alors qu'il se trouve à une température T' inférieure ou égale à 0 °C. La cinquième étape consiste à poursuivre la polymérisation dudit mélange polymérisable, de préférence par photo-polymérisation, jusqu'à obtention d'un alliage de polymères durci. Elle peut par exemple être accomplie en sortant le moule du congélateur et en le plaçant sous une lampe UV, alors que le mélange polymérisable qu'il contient se trouve à une température T' inférieure ou égale à 0 °C. Enfin, on procède au démoulage et à la récupération de l'article moulé comprenant ledit alliage.

Les articles moulés transparents obtenus selon le procédé de l'invention sont de préférence des articles d'optique, c'est-à-dire des verres organiques. Ils sont destinés, généralement mais non exclusivement, à être utilisés en tant qu'articles d'optique, de préférence en tant que lentilles ophtalmiques. Ils peuvent présenter l'avantage de cumuler les propriétés avantageuses de chacun des deux matériaux, notamment la résistance aux solvants du premier matériau thermodurci et une bonne résistance aux chocs apporté par le second matériau polymère s'il s'agit d'un matériau thermoplastique.

Pour améliorer d'autres propriétés de tels articles d'optique, par exemple des lentilles ophtalmiques, dont le substrat est en verre organique, comme, par exemple la résistance à l'abrasion et aux rayures, le caractère anti-réfléchissant et la résistance aux salissures, il est possible de former sur au moins une de leurs faces principales un ou plusieurs revêtements fonctionnels. Un inconvénient majeur des verres organiques, moins durs que les verres minéraux, est leur faible résistance aux rayures. Il est ainsi tout à fait classique de former successivement sur une face principale du substrat un premier revêtement, appelé primaire anti-choc, dont le but est d'accroître la résistance aux chocs de l'article et également l'adhésion au substrat de revêtements ultérieurs puis, sur ce revêtement de primaire anti-choc, un revêtement dur, généralement appelé revêtement anti-abrasion ou anti-rayures, dont le but est d'améliorer la capacité de la surface de l'article d'optique à résister aux endommagements dus à des agressions mécaniques. Vient Se superposer au revêtement anti-abrasion un revêtement anti-reflet, auquel se superpose à son tour un revêtement anti-salissure, dont le rôle est de modifie la tension interfaciale entre la couche anti-reflet et l'eau ou la graisse (afin de diminuer leur adhérence), mais également d'obturer les interstices afin d'empêcher la graisse de s'infiltrer et de subsister.

Les exemples suivants illustrent le procédé, les mélanges polymérisables et les articles d'optique selon l'invention, sans caractère limitatif.

### Exemples

Dans les deux exemples ci-dessous, la composition polymérisable thermodurcissable est une formulation acrylique photo-polymérisable, notée "formulation A", comprenant :
- 98 % en masse d'un diméthacrylate de formule (III), 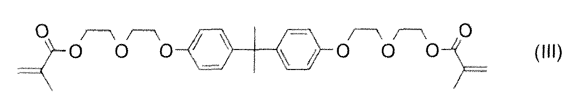
- 1,8 % en masse de 3-méthyl-but-2-èn-1-ol (M-BOL, agent anti-jaunissement),
- 0,2 % en masse de CGI 1850 [photo-amorceur de formule (IV)],
les % étant exprimés par rapport à la masse totale de la composition polymérysable thermodurcissable.

### Exemple 1 : préparation d'un alliage de polymères très peu diffusant de type formulation A / copolymère à blocs SBM contenant environ 10 % en masse de phase thermoplastique.

Le "second matériau polymère" utilisé dans cet exemple est un copolymère à blocs thermoplastique de type SBM. Le copolymère à blocs utilisé dans cet exemple est ainsi un PS-*b*-PB-*b*-PMMA de masse molaire moyenne en poids de 41 900 g/mol ayant une fraction massique du bloc PMMA supérieure à 50%.

### Mode opératoire

### Etape 1 : Préparation du mélange polymérisable

- Pesée dans un flacon en verre de 549,37 g de formulation A.
- Ajout progressif, dans la formulation A et sous agitation, de 61,55 g de copolymère SBM en poudre tel que décrit ci-dessus et dispersion à température ambiante sous agitation.
- Etape de dissolution du copolymère SBM dans la formulation A par chauffage avec un bain d'huile thermostaté (80 °C) et sous agitation durant 7 jours.

Le mélange polymérisable obtenu est transparent et visqueux (viscosité : environ 10 Pa.s à température ambiante).

### Etape 2 : Préparation d'un verre biplan d'épaisseur 2 mm

- Chauffage à 90 °C du mélange polymérisable puis filtration à 20 microns.
- Dégazage pendant 2 heures sous agitation et à 90 °C du mélange polymérisable filtré.
- Prélèvement de 30 mL environ de mélange polymérisable dans une seringue préchauffée à 90 °C.
- Injection de 30 mL environ de mélange polymérisable dans un assemblage constitué de deux parties de moule en verre minéral maintenues par un ruban adhésif en périphérie, préchauffé à 90 °C.
- Dépôt dans un congélateur de l'assemblage. L'assemblage est laissé durant une nuit complète au congélateur à -10 °C (la température est mesurée à l'aide d'un thermocouple plongé dans le mélange polymérisable).
- Sortie du congélateur.
- Polymérisation sous ultraviolet (four IST, lampe dopée Fe, 36 mJ/cm²) durant 4 minutes. La température du mélange polymérisable en début de polymérisation est égale à 0 °C.
- Désassemblage du verre.

**Exemple comparatif C1 :** Identique à l'exemple 1, excepté que l'assemblage n'est pas déposé dans un congélateur après l'étape de moulage par coulée mais directement polymérisé sous ultraviolet en débutant à 27 °C (la température est mesurée à l'aide d'un thermocouple plongé dans le mélange polymérisable).

**Exemple comparatif C2 :** Identique à l'exemple 1, excepté que l'assemblage n'est pas déposé dans un congélateur après l'étape de moulage par coulée mais directement polymérisé sous ultraviolet en débutant à 50 °C (la température est mesurée à l'aide d'un thermocouple plongé dans le mélange polymérisable).

Ces exemples illustrent l'influence de la température du mélange polymérisable, mesurée en début de polymérisation, sur la nano-structuration de l'alliage de polymères. La démixtion d'une phase formée par le bloc poly(méthacrylate de méthyle) est évitée dans l'exemple 1 (T = 0 °C), ce qui permet le maintien d'une nano-structuration et l'obtention d'un matériau macroscopiquement transparent et non (ou très peu) diffusant. Les matériaux des exemples C1 (27 °C) et C2 (50 °C) sont plus diffusants que celui de l'exemple 1. En particulier, l'échantillon de l'exemple C2 est très diffusant. La transparence de l'alliage peut donc être optimisée en augmentant la viscosité du mélange polymérisable.

### Exemple 2 : préparation d'un alliage très peu diffusant de type formulation A / polysulfone contenant environ 5 % en masse de phase thermoplastique.

Le "second matériau" utilisé dans cet exemple est une polysulfone thermoplastique dont le motif de base répond à la formule (VIII), rappelée ci-dessous. Cette polysulfone est commercialisée par Aldrich sous la référence 42,830-2 (masse molaire : 35000 g/mol). L'intérêt de ce polymère thermoplastique réside dans son indice de réfraction élevé (n= 1,63 à 1,67) et dans sa bonne résistance aux chocs et à la chaleur.

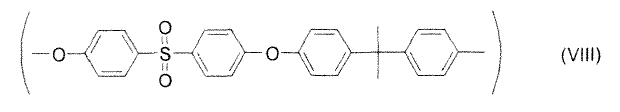

### Mode opératoire

### Etape 1 : Préparation du mélange polymérisable

- Pesée dans un flacon en verre de 357,03 g de formulation A.
- Ajout dans la formulation A de 20 g de granules de la polysulfone décrite ci-dessus et dispersion des granules température ambiante.
- Etape de dissolution : dans un bain d'huile thermostaté (80 °C) et sous agitation, solubilisation de la polysulfone durant 3 semaines.

Le mélange polymérisable obtenu est transparent et visqueux (viscosité : strictement supérieure à 4 Pa.s à température ambiante).

### Etape 2 Préparation d'un verre biplan d'épaisseur 2 mm

- Chauffage à 90 °C du mélange polymérisable puis filtration à 20 microns.
- Dégazage pendant 2 heures sous agitation et à 90 °C du mélange polymérisable filtré.
- Prélèvement de 30 mL environ de mélange polymérisable dans une seringue préchauffée à 90 °C.
- Injection de 30 mL environ de mélange polymérisable dans un assemblage constitué de deux parties de moule en verre minéral maintenues par un ruban adhésif en périphérie, préchauffé à 90 °C.
- Dépôt dans un congélateur de l'assemblage. L'assemblage est laissé durant une nuit complète au congélateur à -10 °C (la température est mesurée à l'aide d'un thermocouple plongé dans le mélange polymérisable).
- Sortie du congélateur et polymérisation sous ultraviolet (four IST, lampe dopée Fe, 36 mW/cm²) durant 10 minutes. La température du mélange polymérisable en début de polymérisation est égale à -10 °C.
- Désassemblage du verre.

**Exemple comparatif C3 :** Identique à l'exemple 2, excepté que l'assemblage n'est pas déposé dans un congélateur après l'étape de moulage par coulée mais directement polymérisé sous ultraviolet en débutant à 50°C (la température est mesurée à l'aide d'un thermocouple plongé dans le mélange polymérisable) .

Ces exemples illustrent l'influence de la température du mélange polymérisable mesurée en début de polymérisation sur la structure finale de l'alliage. La démixtion d'une phase formée par la polysulfone thermoplastique lors de la polymérisation de la phase thermodurcissable est évitée dans l'exemple 2 (T = -10 °C), ce qui permet une nano-structuration et l'obtention d'un matériau macroscopiquement transparent et non (ou très peu) diffusant.

En revanche, le thermoplastique, initialement solubilisé dans la formulation A, ne reste pas dispersé d'une manière homogène dans la phase thermodurcie lorsque la température de début de polymérisation est de 50 °C. L'alliage de l'exemple C3 (50 °C) est diffusant, le thermoplastique étant expulsé du réseau thermodurci pendant la polymérisation.

## Revendications

1. Procédé de préparation d'un article moulé transparent comprenant un alliage d'un premier matériau polymère thermodurci formant la matrice dudit article, et d'un second matériau polymère dispersé au sein dudit premier matériau, ledit procédé comprenant au moins les étapes suivantes :
i) préparation d'un mélange polymérisable liquide par dissolution dudit second matériau polymère dans une composition polymérisable thermodurcissable précurseur dudit premier matériau polymère thermodurci,
ii) remplissage d'un moule avec le mélange polymérisable liquide obtenu à l'étape i),
iii) refroidissement du mélange polymérisable liquide remplissant le moule jusqu'à une température T inférieure ou égale à 0 °C,
iv) amorçage de la polymérisation dudit mélange polymérisable liquide refroidi à une température T' inférieure ou égale à 0 °C,
v) poursuite de la polymérisation dudit mélange polymérisable liquide jusqu'à obtention d'un alliage de polymères durci, et
vi) démoulage de l'article moulé formé par ledit alliage de polymères.

2. Procédé de préparation d'un article moulé transparent selon la revendication 1, **caractérisé en ce que** les température T et T' sont comprises indépendamment entre -15 °C et 0 °C.

3. Procédé de préparation d'un articles moulé transparent selon l'une quelconque des revendications précédentes, **caractérisé en ce que** la composition polymérisable thermodurcissable représente de 70 à 97 % de la masse du mélange polymérisable et **en ce que** le second matériau polymère représente de 3 à 30 % en poids du mélange liquide polymérisable.

4. Procédé de préparation d'un article moulé transparent selon l'une quelconque des revendications précédentes, **caractérisé en ce que** la composition polymérisable thermodurcissable comprend au moins un matériau choisi parmi un monomère polymérisable, un oligomère polymérisable et un prépolymère polymérisable.

5. Procédé de préparation d'un article moulé transparent selon la revendication 4, **caractérisé en ce que** la composition polymérisable thermodurcissable comprend au moins un monomère choisi parmi un polyméthacrylate aliphatique monomère polymérisable, un polyméthacrylate aromatique monomère polymérisable, un polyacrylate aliphatique monomère polymérisable, et un polyacrylate aromatique monomère polymérisable.

6. Procédé de préparation d'un article moulé transparent selon la revendication 5, **caractérisé en ce que** ledit monomère est choisi parmi les diméthacrylates aromatiques polyalcoxylés et les diacrylates aromatiques polyalcoxylés.

7. Procédé de préparation d'un article moulé transparent selon l'une quelconque des revendications précédentes, **caractérisé en ce que** la composition polymérisable thermodurcissable comprend au moins un monomère répondant à la formule (I) : 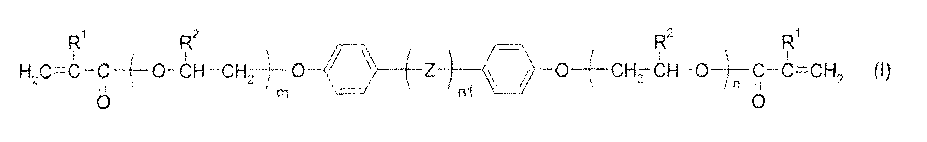 dans laquelle:
- R¹ représente un atome d'hydrogène ou un radical alkyle en C₁-C₆,
- R² représente un atome d'hydrogène ou un groupe choisi parmi les radicaux alkyle en C₁-C₆ et 2-hydroxyéthyle,
- n1 est égal à 0 ou 1,
- Z représente un groupe choisi parmi O, S, Se, NH, C=O, SO, SO₂, SeO₂, CH₂, -CH=CH- et -C(R)₂- où R représente un atome d'hydrogène ou un radical alkyle en C₁-C₆, et
- la somme m + n représente un nombre entier compris entre 1 et 10.

8. Procédé de préparation d'un article moulé transparent selon la revendication 7, **caractérisé en ce que** la composition polymérisable thermodurcissable comprend au moins un monomère répondant à la formule (II) : 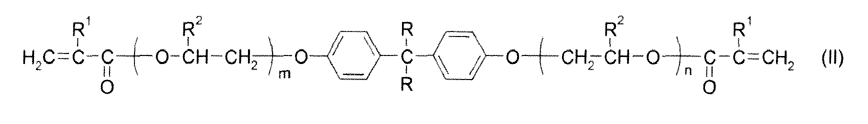 dans laquelle R¹ et R² représentent chacun, indépendamment l'un de l'autre, un atome d'hydrogène ou un groupe CH₃, R représente un atome d'hydrogène ou un radical alkyle en C₁-C₆, et la somme m + n représente un nombre entier compris entre 2 et 8.

9. Procédé de préparation d'un article moulé transparent selon la revendication 8, **caractérisé en ce que** ledit monomère répond à la formule (III) :

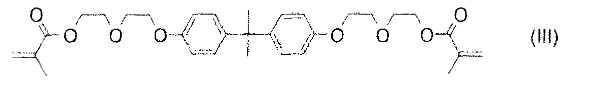

10. Procédé de préparation d'un article moulé transparent selon l'une quelconque des revendications précédentes, **caractérisé en ce que** la composition polymérisable thermodurcissable comprend en outre au moins un amorceur de polymérisation, de préférence au moins un pnoto-amorceur, la masse du ou des amorceurs de polymérisation représentant de 0,1 à 10 % de la masse de la composition polymérisable thermodurcissable.

11. Procédé de préparation d'un article moulé transparent selon l'une quelconque des revendications précédentes, **caractérisé en ce que** ledit second matériau polymère est un matériau polymère thermoplastique.

12. Procédé de préparation d'un article moulé transparent selon l'une quelconque des revendications précédentes, **caractérisé en ce que** le second matériau polymères comprend au moins une polysulfone, dont le motif de base répond à la formule (VI) : 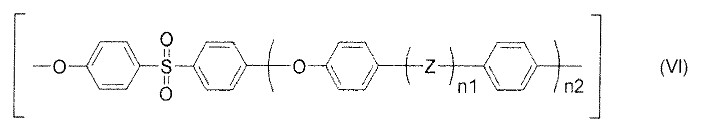 dans laquelle n1 est égal à 0 ou 1, n2 représente un nombre entier compris entre 0 et 10, et Z représente un groupe choisi parmi O, S, Se, NH, C=O, SO, SO₂, SeO₂, CH₂, -CH=CH- et -C(R)₂- où R représente un atome d'hydrogène ou un radical alkyle en C₁-C₆.

13. Procédé de préparation d'un article moulé transparent selon la revendication 12, **caractérisé en ce que** ladite polysulfone est une polysulfones dont le motif de base répond à la formule (VII) : 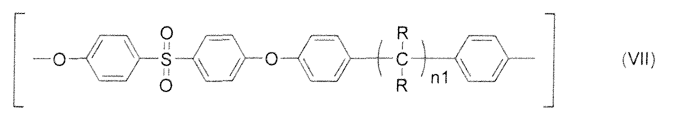 dans laquelle n1 est égal à 0 ou 1 et R représente un atome d'hydrogène ou un radical alkyle en C₁-C₆; de préférence une polysulfone dont le motif de base répond à la formule (VIII) :

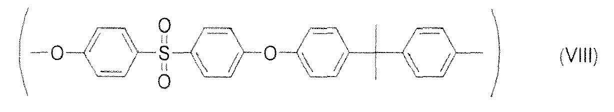

14. Procédé de préparation d'un article moulé transparent selon l'une quelconque des revendications 12 à 13, **caractérisé en ce que** ladite polysulfone a une masse molaire moyenne en poids comprise entre 20000 et 60000 g/mol, de préférence comprise entre 30000 et 40000 g/mol.

15. Procédé de préparation d'un article moulé transparent selon l'une quelconque des revendications précédentes, **caractérisé en ce que** le second matériau polymère comprend au moins un copolymère à blocs choisi parmi les copolymères diblocs, les copolymères triblocs et leurs mélanges, de préférence parmi les copolymères triblocs.

16. Procédé de préparation d'un article moulé transparent selon l'une quelconque des revendications précédentes, **caractérisé en ce que** le second matériau polymère comprend au moins un copolymère à blocs comportant au moins un bloc compatible avec la composition polymérisable thermodurcissable permettant la dispersion dudit copolymère à blocs dans ladite composition polymérisable thermodurcissable.

17. Procédé de préparation d'un article moulé transparent selon l'une quelconque des revendications 15 à 16, **caractérisé en ce que** le copolymère à blocs compote au moins un bloc polyméthacrylate d'alkyle ou au moins un bloc polyacrylate d'alkyle.

18. Procédé de préparation d'un article moulé transparent selon la revendication 17, **caractérisé en ce que** ledit copolymère à blocs comporte en outre au moins un bloc polystyrène et au moins un bloc polybutadiène.

19. Procédé de préparation d'un article moulé transparent selon l'une quelconque des revendications 15 à 18, **caractérisé en ce que** ledit copolymère à blocs est un copolymère à blocs polrstyréne-bloc-polybutadièrie-bloc-poly(méthacrylate de méthyle) (PS-b-PB-b-PMMA).

20. Procédé de préparation d'un article moulé transparent selon la revendication 19, **caractérisé en ce que** le bloc de PMMA représente de 50% à 80% en poids, de préférence de 52% à 70% en poids de la masse moléculaire moyenne en poids du copolymère à blocs polystyrène-bloc-polybutadiène-bloc-poly(méthacrylate de méthyle).

21. Procédé de préparation d'un article moulé transparent selon l'une quelconque des revendications 15 à 20, **caractérisé en ce que** la masse moléculaire moyenne en poids dudit bloc poly(methacrylate de méthyle) est comprise entre 10 000 et 100 000 g/mol.

22. Procédé de préparation d'un article moulé transparent selon l'une quelconque des revendications précédentes, **caractérisé en ce que** le mélange polymérisable est polymérisé par photo-polymérisation.

23. Procédé de préparation d'un article moulé transparent selon l'une quelconque des revendication précédentes, **caractérisé en ce que** ledit article moulé transparent est un article d'optique, de préférence une lentille ophtalmique.

24. Article moulé transparent comprenant un alliage de polymères, dont au moins l'un est un polymère thermodurcissable, susceptible d'être obtenu par un procédé selon l'une quelconque des revendications précédentes.
